# DEMANDE DE BREVET EUROPEEN

(11) **EP 2 398 184 A1**
(43) Date de publication de la demande: **21.12.2011**
(21) Numéro de dépôt: 11164390.4
(22) Date de dépôt: 02.05.2011
(51) Int. Cl.: H04L 12/18, H04N 7/14, H04N 7/15

(54) **Procédé d'enrichissement d'un flux multimédia communiqué par un émetteur au moyen d'une application de visiophonie**

(30) Priorité: 16.06.2010 FR 1002557
(71) Demandeur: Alcatel Lucent, 75007 Paris (FR)
(72) Inventeur: Cabasse, Gilbert, 29228, BREST (FR); Bonnaud, Fabrice, 29228, BREST (FR)
(74) Mandataire: Shamsaei Far, Hassan

(57) **Abrégé**

L'invention concerne un procédé d'enrichissement d'un flux multimédia (1) communiqué par un émetteur au moyen d'une application (2) de visiophonie, ledit procédé prévoyant la sélection par l'émetteur d'un contenu (11, 16, 19, 21, 24), la transformation dudit contenu en un média (17) apte à être communiqué au moyen de l'application (2) de visiophonie, puis l'insertion dudit média dans le flux multimédia (1) communiqué, les paramètres de transmission du média (17) inséré et/ou du flux multimédia (1) étant adaptés en fonction de la nature du contenu (11, 16, 19, 21, 24) et/ou de la bande passante disponible pour la communication.

## Description

L'invention concerne un procédé d'enrichissement d'un flux multimédia communiqué par un émetteur au moyen d'une application de visiophonie, ainsi qu'une application de cybercaméra virtuelle (virtual webcam) pour la mise en oeuvre d'un tel procédé.

Avec le développement et la démocratisation des terminaux nouvelle génération, comme les téléphones de troisième génération (3G, pour l'anglais Third Generation) ou les terminaux numériques (pour l'anglais set-top-box) de télévision interactive, l'usage de la vidéoconférence est aujourd'hui largement répandu, notamment à des fins professionnelles. Le système de communication multimédia le plus utilisé actuellement est la visiophonie SIP (pour l'anglais Session Initiation Protocol).

En particulier, dans les centres d'appels, un émetteur peut, au moyen d'une application de visiophonie (pour l'anglais softphone) installée sur son ordinateur de bureau, communiquer un flux multimédia, par exemple une vidéo en temps réel dudit émetteur capturée au moyen d'une cybercaméra (pour l'anglais webcam), à ses correspondants, qui reçoivent ledit flux au moyen d'un téléphone équipé d'un écran, ou d'une application de visiophonie installée sur leur ordinateur ou sur un terminal numérique connecté à leur écran de télévision.

L'émetteur peut en particulier communiquer un flux multimédia comprenant une ou plusieurs vidéos, chaque vidéo étant alors destinée à une zone d'affichage différente, et/ou un ou plusieurs flux audio.

En outre, si l'émetteur veut en plus enrichir le flux multimédia qu'il communique avec d'autres types de contenus, il peut installer sur son ordinateur une application de cybercaméra virtuelle (pour l'anglais virtual webcam software), comme par exemple l'application WebcamMax®, qui est reconnue en tant que cybercaméra par l'application de visiophonie installée sur ledit ordinateur.

Une telle application permet entre autres à l'émetteur de sélectionner différents types de contenus qu'il souhaite communiquer, par exemple des fichiers image, des fichiers vidéo ou des captures d'écran, notamment en affichant pour chaque type de contenu sélectionné une fenêtre de dialogue permettant d'accéder au dossier approprié d'un espace de stockage donné, par exemple le disque dur du terminal de l'émetteur ou un serveur.

Une fois le contenu sélectionné, l'application de cybercaméra virtuelle transforme ledit contenu en un média vidéo semblable au flux vidéo d'une cybercaméra et apte à être communiqué par l'application de visiophonie installée sur le terminal de l'éditeur, puis envoie ledit média à ladite application qui encode ledit média et l'insère dans un flux multimédia, afin que l'émetteur communique à ses correspondants ledit média inséré dans ledit flux multimédia.

Par exemple, si l'émetteur est un téléopérateur travaillant pour une agence immobilière, il peut, grâce à une application de cybercaméra virtuelle appropriée, sélectionner les fichiers des maisons à vendre dans le portefeuille de l'agence, ledit portefeuille étant stocké dans une base de données commune.

En outre, chaque fichier peut contenir :
- des informations textuelles sur une maison, par exemple son adresse, son prix de vente, ou une description de ladite maison ;
- des photographies de ladite maison ;
- une vidéo de présentation, par exemple pour une visite virtuelle, de ladite maison ;
- des liens hypertexte vers des sites de localisation géographique de ladite maison, tels que Google Map® ou Google Earth®, ou vers la page Internet de ladite maison si elle est présentée sur le portail du site de l'agence immobilière ;
- des liens hypertexte vers d'autres types de documents, comme un fichier
   - doc de modèle de contrat ou un fichier .pdf d'informations cadastrales.

Les applications de cybercaméra virtuelle actuellement disponibles peuvent coopérer avec les applications de communication multimédia compatibles avec une cybercaméra classique, et les médias qu'elles communiquent peuvent être consultés par un correspondant au moyen de n'importe quel terminal compatible avec l'application de communication multimédia utilisée par l'émetteur.

De plus, ces applications permettent à l'émetteur de garder le contrôle exclusif du flux multimédia qu'il communique, et notamment de gérer la confidentialité des médias insérés dans ledit flux, contrairement aux applications de partage de fichiers où le correspondant peut consulter sans aucune limitation lesdits médias.

Cependant, ces applications ne donnent pas entièrement satisfaction dans le domaine professionnel, car elles ne permettent pas à l'émetteur de communiquer des médias avec une qualité adaptée à la nature des contenus correspondants, et surtout d'adapter dynamiquement les paramètres de transmission utilisés par l'application de visiophonie durant la communication du flux multimédia dans lequel sont insérés lesdits média.

De telles lacunes peuvent se montrer préjudiciables pour la qualité de la communication, ce qui pose notamment problème dans le milieu professionnel, car la qualité du service rendu à la clientèle peut en pâtir de façon évidente.

En effet, la communication d'un média avec des paramètres inadaptés, par exemple la photographie d'une maison avec une résolution trop faible, ou au contraire une vidéo de ladite maison avec une résolution trop importante, notamment lorsque communiquée dans un flux multimédia comprenant en outre une vidéo en temps réel de l'émetteur, peut entraîner un inconfort de lecture pour le client consultant ladite photographie sur son terminal, ou des problèmes d'affichage de ladite vidéo sur le terminal dudit client, notamment en raison du manque de bande passante disponible.

La bande passante utilisée par une application de visiophonie pour communiquer un flux multimédia dépend d'un grand nombre de paramètres, parmi lesquels :
- la résolution du média inséré dans ledit flux ;
- la cadence dudit média, c'est-à-dire le nombre de trames par seconde (en anglais, frame rate) ;
- la méthode d'encodage utilisée (par exemple les normes H263 ou H264) ;
- d'autres paramètres propres à ladite méthode d'encodage.

En outre, une application de visiophonie communique par défaut un flux multimédia comprenant une image animée ou une vidéo. De ce fait, le flux multimédia communiqué présente généralement une cadence élevée, tandis que le codeur-décodeur utilisé par ladite application ajuste les autres paramètres dudit flux, notamment la résolution, en fonction de ses paramètres propres et surtout de la bande passante disponible.

Cependant, l'application de cybercaméra virtuelle permet de sélectionner des contenus de natures différentes, donc les média issus de la transformation desdits contenus peuvent présenter des paramètres de transmission variables. Par exemple :
- un média comprenant une image fixe présente généralement une faible cadence, mais nécessite une forte résolution pour une meilleure visibilité ;
- un média comprenant une vidéo peut présenter une faible résolution, mais nécessite en revanche une forte cadence pour éviter les problèmes d'affichage ;
- un média comprenant une capture d'écran du terminal de l'émetteur nécessite une résolution identique à la résolution de l'image ou de la vidéo visible dans ladite capture, mais peut présenter une cadence relativement faible.

En outre, les paramètres de transmission d'un média fourni par une application de cybercaméra virtuelle sont, tout comme les paramètres de transmission d'une vidéo issue d'une cybercaméra classique, affranchis des problèmes de bande passante rencontrés par l'application de visiophonie avec laquelle elles coopèrent, en ce que ledit média et/ou ladite vidéo sont communiqués entre lesdites applications à partir d'un même terminal, celui de l'émetteur.

L'invention vise à perfectionner l'art antérieur en proposant notamment un procédé d'enrichissement d'un flux multimédia communiqué par un émetteur qui permette d'adapter de façon dynamique et avantageuse les paramètres de transmission des médias insérés dans ledit flux multimédia et/ou dudit flux multimédia, afin d'améliorer la qualité de la communication tout en préservant la bande passante.

A cet effet, selon un premier aspect, l'invention propose un procédé d'enrichissement d'un flux multimédia communiqué par un émetteur au moyen d'une application de visiophonie, ledit procédé prévoyant la sélection par l'émetteur d'un contenu, la transformation dudit contenu en un média apte à être communiqué au moyen de l'application de visiophonie, puis l'insertion dudit média dans le flux multimédia communiqué, les paramètres de transmission du média inséré et/ou dudit flux multimédia étant adaptés en fonction de la nature du contenu et/ou de la bande passante disponible pour la communication.

Selon un deuxième aspect, l'invention propose une application de cybercaméra virtuelle pour l'enrichissement d'un flux multimédia communiqué par un émetteur au moyen d'une application de visiophonie, ladite application comprenant :
- des moyens de sélection par l'émetteur d'un contenu ;
- des moyens de transformation dudit contenu en un média apte à être communiqué au moyen de l'application de visiophonie ;
- des moyens d'insertion dudit média dans le flux multimédia communiqué ;
dans laquelle les moyens d'insertion sont aptes à adapter les paramètres de transmission du média inséré et/ou du flux multimédia en fonction de la nature du contenu et/ou de la bande passante disponible pour la communication.

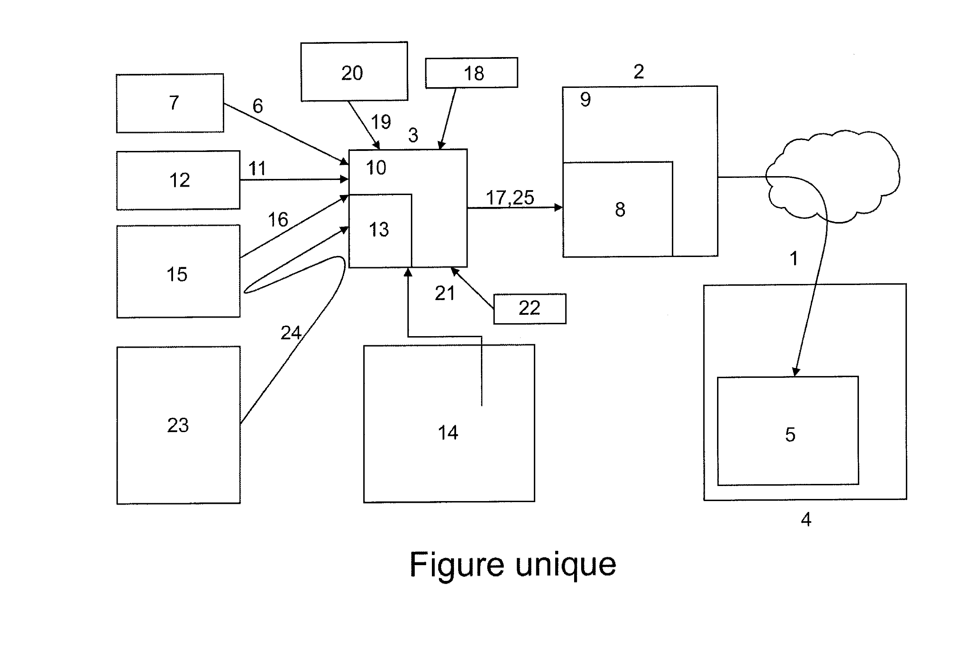

D'autres particularités et avantages de l'invention apparaîtront dans la description qui suit, faite en référence à la figure jointe représentant de façon schématique une architecture pour la mise en oeuvre d'un procédé d'enrichissement d'un flux multimédia selon un mode de réalisation de l'invention.

En relation avec cette figure, on décrit ci-dessous un procédé d'enrichissement d'un flux multimédia 1 communiqué par un émetteur au moyen d'une application 2 de visiophonie installée sur son terminal.

Pour cela, l'invention prévoit l'utilisation par l'émetteur d'une application 3 de cybercaméra virtuelle compatible avec l'application 2 de visiophonie utilisée par ledit émetteur pour communiquer un flux multimédia 1 à ses correspondants, qui reçoivent ledit flux sur leur terminal 4 et le visualisent dans une fenêtre 5 affichée sur l'écran dudit terminal.

Le flux multimédia 1 peut par exemple comprendre une vidéo 6 en temps réel de l'émetteur capturée au moyen d'une cybercaméra 7 et visible pour ledit émetteur dans une zone 8 de l'interface graphique utilisateur 9 (GUI, pour l'anglais Graphical User Interface) de l'application 2 de visiophonie, et/ou une diffusion en temps réel de la voix dudit émetteur.

L'application 3 de cybercaméra virtuelle peut être distincte de l'application 2 de visiophonie et coopérer avec ladite application de visiophonie par l'intermédiaire d'interfaces de programmation (API, pour l'anglais Application Programming Interface). Dans ce cas, l'application 3 de cybercaméra virtuelle comprend une interface graphique utilisateur 10 qui lui est propre.

L'application 3 de cybercaméra virtuelle peut aussi être intégrée à l'application 2 de visiophonie, afin de présenter à l'émetteur une seule interface graphique utilisateur commune aux deux applications 2, 3 et ainsi améliorer la simplicité d'utilisation par ledit émetteur des fonctionnalités offertes par ces deux applications 2, 3.

Pour enrichir un flux multimédia 1 communiqué par l'émetteur, le procédé prévoit en premier lieu la sélection par ledit émetteur d'un contenu. Pour cela, l'application 3 de cybercaméra virtuelle comprend des moyens de sélection par l'émetteur d'un contenu.

Le contenu sélectionné peut être par exemple un fichier 11 image, vidéo, audio ou texte stocké dans un dossier 12, ledit dossier pouvant être un dossier permanent localisé dans une base de données d'un réseau ou dans une application de gestion des relations clients (CRM, pour l'anglais Customer Relationship Management) du centre d'appel de la société dans laquelle travaille ledit émetteur, ou encore sur le disque dur du terminal dudit émetteur.

Selon une réalisation, l'émetteur peut sélectionner un contenu dans un dossier 12 en copiant ledit contenu pour le coller dans une zone de visualisation du flux multimédia 1 communiqué ou en faisant glisser ledit contenu depuis ledit dossier dans ladite zone.

Selon une réalisation, et en relation avec la figure, si l'application 3 de cybercaméra virtuelle est intégrée à l'application 2 de visiophonie, la zone de visualisation dudit flux peut être la zone 8 de l'interface 9 de l'application 2 de visiophonie.

Selon une autre réalisation, si l'application 3 de cybercaméra virtuelle est distincte de l'application 2 de visiophonie, la zone de visualisation du flux multimédia 1 peut être par exemple la zone 13 de l'interface 10 de l'application 3 de cybercaméra virtuelle, l'émetteur interagissant avec ladite zone pour enrichir le flux multimédia 1 qu'il communique.

En outre, dans les deux réalisations ci-dessus, la zone 8, 13 de visualisation du flux multimédia 1 permet à l'émetteur de visualiser ledit flux tel qu'il est affiché dans la fenêtre 5 de l'écran d'un terminal 4 d'un correspondant dudit émetteur, et correspond en outre à l'unique zone de l'interface 9, 10 de l'application 2, 3 considérée qui soit visible par ledit correspondant.

Dans la suite de la description, la zone de visualisation considérée pour l'enrichissement du flux multimédia 1 communiqué est la zone de visualisation 13 de l'interface 10 de l'application 3 de cybercaméra virtuelle.

En outre, si l'émetteur sélectionne un contenu en le copiant, ledit contenu peut être automatiquement mémorisé dans un dossier temporaire de type-presse papier, et l'émetteur peut alors coller ledit contenu depuis ledit dossier presse-papier, ce qui permet notamment d'éviter à l'émetteur souhaitant coller plusieurs fois un même contenu de rechercher à chaque fois ledit contenu dans des arborescences complexes, afin de lui faire gagner du temps et de réduire le risque d'erreur de manipulation.

Un tel dossier presse-papier peut être fourni par le système d'exploitation installé sur le terminal de l'émetteur, comme par exemple n'importe quelle version de Microsoft Windows®, ou peut être dépendant de la nature du contenu sélectionné. Par exemple, si le contenu est un fichier .doc, l'application d'ouverture par défaut dudit contenu peut être une application de traitement de texte, comme n'importe quelle version de l'application Microsoft Word®, et le dossier presse-papier considéré est celui associé à la suite Microsoft Office®.

Dans ce mode de réalisation, l'application 3 de cybercaméra virtuelle peut en particulier prévoir des interfaces de programmation pour interagir avec les dossiers presse-papier, et ainsi permettre à l'émetteur de coller directement un contenu mémorisé dans lesdits dossiers dans la zone de visualisation 13.

En outre, l'application 3 de cybercaméra virtuelle peut prévoir de telles interfaces de programmation pour permettre à l'émetteur de sélectionner, par exemple au moyen de la souris du terminal dudit émetteur, un contenu dans un dossier 12 permanent ou un dossier presse-papier tel que décrit ci-dessus pour faire directement glisser, en maintenant enfoncé le bouton gauche de ladite souris, ledit contenu depuis un tel dossier, puis déposer ledit contenu dans la zone de visualisation 13 en relâchant ledit bouton.

Cependant, les dossiers presse-papier des systèmes d'exploitation actuels ne peuvent pas en général mémoriser simultanément plusieurs contenus copiés successivement par un émetteur, car chaque contenu copié est automatiquement effacé par le contenu suivant.

En outre, les dossiers presse-papier associés aux applications couramment utilisées pour l'ouverture par défaut de contenus ne peuvent en général mémoriser qu'une portion d'un contenu, par exemple une portion d'un fichier image ou d'un fichier texte, mais pas ledit contenu en entier.

Pour pallier à ces lacunes, l'application 3 de cybercaméra virtuelle peut prévoir un dossier presse-papier adapté pour permettre à l'émetteur de gagner du temps en copiant à l'avance plusieurs contenus différents, par exemple des fichiers ou des portions de fichiers, afin de coller plus rapidement lesdits contenus dans la zone de visualisation 13 du flux multimédia 1 qu'il communique, par exemple au moyen d'un bouton interactif disponible sur l'interface 10.

En outre, l'interface 10 peut comprendre une fonction interactive, par exemple un onglet dans un menu déroulant ou un bouton, permettant à l'émetteur de sauvegarder dans un dossier 12 permanent de son choix l'ensemble des contenus copiés dans le dossier presse-papier de l'application 3 de cybercaméra virtuelle, afin de permettre audit émetteur de retrouver rapidement lesdits contenus en vue d'une sélection ultérieure.

En particulier, l'application 3 de cybercaméra virtuelle peut comprendre des moyens pour établir un historique des contenus précédemment sélectionnés par l'émetteur et des moyens pour présenter ledit historique sous forme d'une liste comprenant des liens d'accès rapide auxdits contenus et des moyens pour rendre ladite liste accessible pour ledit émetteur depuis l'interface 10.

En outre, l'application 3 de cybercaméra virtuelle peut comprendre une interface de programmation pour interagir avec le système d'exploitation installé sur le terminal de l'émetteur, afin d'insérer dans les contenus un menu contextuel accessible pour l'émetteur en cliquant sur lesdits contenus avec le bouton droit de la souris de son terminal, ledit menu permettant en outre à l'émetteur de sélectionner lesdits contenus en les ouvrant directement avec ladite application de cybercaméra virtuelle.

Pour ce faire, l'interface de programmation précitée peut permettre à l'émetteur de définir l'application 3 de cybercaméra virtuelle comme possible application d'ouverture d'un contenu, par exemple en enregistrant ladite application dans la liste des applications d'ouverture dudit contenu, ladite liste étant accessible avec l'onglet « ouvrir avec... » du menu contextuel inséré dans ledit contenu.

En outre, cette interface de programmation peut permettre à l'émetteur de définir l'application 3 de cybercaméra virtuelle comme application d'ouverture par défaut d'un contenu, ledit émetteur pouvant alors sélectionner ultérieurement ledit contenu en double cliquant sur ledit contenu avec la souris de son terminal, ou en cliquant avec ladite souris sur l'onglet « ouvrir » du menu contextuel inséré dans ledit contenu, ledit onglet pouvant en outre apparaître en gras dans ledit menu.

L'émetteur peut également activer au moyen de la souris de son terminal un lien hypertexte, ledit lien étant disponible dans un document ou une page Internet, et rattaché à une base de données 14, ledit lien permettant en outre de lancer une application, comme une page Internet.

Dans ce cas, les moyens de sélection de l'application 3 de cybercaméra virtuelle peuvent être aptes à coopérer avec une application 15 de capture d'écran, une capture 16 de l'écran du terminal de l'émetteur étant alors automatiquement sélectionnée en tant que contenu par lesdits moyens.

En outre, l'application 3 de cybercaméra virtuelle peut coopérer avec l'application 15 de capture d'écran lors de l'ouverture d'un fichier 11 au moyen de l'application d'ouverture par défaut dudit fichier, ladite application d'ouverture pouvant être n'importe quelle application possédant un identifiant MIME (Multipurpose Internet Mail Extensions). Dans ce cas, lorsque le fichier 11 est ouvert, une capture d'écran 16 est automatiquement sélectionnée en tant que contenu.

L'émetteur peut également sélectionner un contenu dans le flux multimédia 1 communiqué, par exemple une partie dudit flux multimédia 1, afin de mettre en évidence ladite partie. Pour ce faire, les moyens de sélection de l'application 3 de cybercaméra virtuelle peuvent être aptes à afficher une fonction interactive sur l'interface 10 pour permettre à l'émetteur de sélectionner un tel contenu en activant ladite fonction.

La fonction interactive peut être un icône en forme de cible sur lequel l'émetteur clique avec la souris de son terminal, le curseur de ladite souris prenant alors la forme d'une cible au moyen de laquelle ledit émetteur délimite une portion dudit flux, par exemple en maintenant enfoncé le bouton gauche de sa souris et en faisant glisser ladite cible dans la zone 13 de visualisation du flux multimédia 1 communiqué, ladite portion étant sélectionnée en tant que contenu lorsque l'émetteur relâche ledit bouton.

La fonction interactive peut également être un bouton d'activation d'un mode d'agrandissement d'une portion de la zone 13 de visualisation. Lorsque l'émetteur clique sur ce bouton dans l'interface 10, le curseur de la souris peut prendre par exemple la forme d'une loupe, que l'émetteur dirige au centre de la portion de la zone 13 qu'il veut agrandir. Ensuite, l'émetteur peut gérer l'agrandissement de la portion, par exemple au moyen de la molette de sa souris, ladite portion agrandie étant sélectionnée en tant que contenu lorsque l'émetteur cesse par exemple d'actionner ladite molette.

En outre, selon une réalisation, cette fonction interactive d'agrandissement peut être combinée à la fonction interactive de ciblage décrite précédemment, l'émetteur actionnant la molette de sa souris pour agrandir une sous-portion d'une portion présélectionnée par ciblage, ladite sous-portion étant alors sélectionnée en tant que contenu lorsque l'émetteur cesse par exemple d'actionner ladite molette.

Une fois qu'au moins un contenu a été sélectionné, le procédé prévoit la transformation dudit contenu en un média 17 apte à être communiqué au moyen de l'application 2 de visiophonie, puis l'insertion dudit média dans le flux multimédia 1 communiqué.

Pour ce faire, l'application 3 de cybercaméra virtuelle comprend des moyens de transformation du contenu sélectionné en un tel média 17, ainsi que des moyens d'insertion dudit média dans le flux multimédia 1 communiqué.

Selon un mode de réalisation, plusieurs contenus sont transformés en médias 17, lesdits médias étant insérés successivement dans le flux multimédia 1 communiqué, avec des effets de transition intercalés entre chacun desdits médias, lesdits effets pouvant par exemple consister en la disparition d'une image avec un effet de flou ou de fondu pour laisser place à l'image suivante.

Par exemple, l'interface 10 peut comprendre une fonction interactive, par exemple un bouton ou un onglet, permettant à l'émetteur de choisir de tels effets dans une bibliothèque par défaut de l'application de cybercaméra virtuelle ou dans une bibliothèque externe, comme celles disponibles sur Internet à l'adresse http://www-flashslider.com/effect.php, lesdits effets étant alors automatiquement sélectionnés en tant que contenus, puis transformés en médias 17 et insérés dans le flux multimédia 1 communiqué lorsque l'émetteur sélectionne un nouveau contenu.

En outre, lorsque le média 17 est issu d'une capture d'écran 16, l'émetteur court le risque, en déplaçant le curseur de sa souris pour sélectionner un nouveau contenu, par exemple dans un dossier 12, ou, si le média 17 comprend une vidéo, pour chercher une autre séquence de ladite vidéo, que des informations présentes sur l'écran de son terminal deviennent visibles dans la zone 13, ce qui peut notamment poser des problèmes de confidentialité.

Pour éviter ce désagrément, les moyens de sélection de l'application 3 peuvent être aptes à fournir une fonctionnalité de gel du média 17, de sorte à interrompre temporairement la communication de la capture d'écran 16 transformée en média 17, le temps que l'émetteur sélectionne le prochain contenu à insérer en tant que média 17 transformé.

Cette fonctionnalité de gel du média 17 peut par exemple être accessible à l'émetteur au moyen d'un bouton interactif de l'interface 10, ou, de préférence, au moyen d'un raccourci clavier paramétré dans un menu de l'interface 10, pour éviter à l'émetteur les situations qui amèneraient à communiquer une capture d'écran 16 d'une portion non désirée de ladite interface dans le flux multimédia 1.

L'émetteur peut aussi présélectionner des contenus, par exemple dans un dossier 12 permanent et enregistrer ladite présélection dans ledit dossier ou dans un autre dossier 12 de son choix, en vue de créer une liste de lecture ou un diaporama à partir de ladite présélection.

Une telle option peut permettre à un émetteur travaillant dans un centre d'appels de préparer à l'avance l'ensemble des contenus à communiquer en tant que médias transformés à un correspondant, par exemple en fonction d'un produit vendu par la société employant ledit émetteur, afin de sélectionner directement ledit ensemble en tant que contenu global, et ainsi de gagner du temps.

Pour cela, l'application 3 de cybercaméra virtuelle peut comprendre un module 18 comprenant des moyens pour permettre à l'émetteur de bénéficier de toutes les fonctionnalités usuelles des applications de création de listes de lectures ou des applications de création de diaporamas telles que Microsoft PowerPoint®, ledit module pouvant en outre être apte à afficher sur l'interface 10 une fonction interactive, par exemple un bouton ou un onglet, pour permettre à l'émetteur d'accéder auxdites fonctionnalités.

En particulier, le module 18 peut comprendre une base de données dans laquelle l'émetteur peut stocker les diaporamas qu'il a créés, afin de pouvoir retrouver facilement lesdites diaporamas et les sélectionner ultérieurement en tant que contenus.

L'émetteur peut bénéficier de la fonctionnalité de pause, de retour au début, de progression manuelle au moyen de boutons interactifs « précédent » et « suivant », d'édition dudit diaporama ou de ladite liste par interversion des diapositives ou des séquences, de définition du temps de diffusion pour l'ensemble de ladite liste ou dudit diaporama, ou pour chaque diapositive ou séquence, d'insertion d'effets de transition entre chaque diapositive ou séquence comme décrit ci-dessus, ou encore d'une fonctionnalité pour définir, lorsque l'émetteur sélectionne une vidéo, la séquence temporelle de début de ladite vidéo.

En outre, les moyens de sélection de l'application 3 de cybercaméra virtuelle peuvent être aptes à coopérer avec le module 18 de création de diaporamas, par exemple pour permettre à l'émetteur de sélectionner une portion de la zone 13 par ciblage et/ou par agrandissement et de sélectionner ladite portion en tant que contenu et l'inclure dans un diaporama.

Les moyens de sélection peuvent également être aptes à coopérer avec le module 18 pour permettre à l'émetteur de sélectionner un fichier 11 en l'ouvrant au moyen de l'application 3 de cybercaméra virtuelle, puis de choisir une partie dudit fichier, par exemple un groupe de pages ou de chapitres si ledit fichier est un fichier .doc ou .pdf, afin qu'une capture d'écran 16 de ladite partie soit sélectionnée en tant que contenu et incluse dans un diaporama.

Selon une réalisation, le média 17 peut être inséré dans un flux multimédia 1 en étant superposé audit flux. Pour cela, les moyens d'insertion de l'application 3 de cybercaméra virtuelle peuvent être aptes à afficher sur l'interface 10 une fonction interactive permettant à l'émetteur d'insérer un média 17 dans un flux multimédia 1 en superposant ledit média audit flux.

En particulier, le contenu à sélectionner peut être une image 19, par exemple en forme d'icône, ladite image étant stockée dans une base de données d'un module 20 de l'application 3 de cybercaméra virtuelle. En particulier, la base de données du module 20 peut être configurée par défaut et comprendre initialement des icônes 19 spécifiques, ledit module comprenant des moyens pour mettre à disposition de l'émetteur lesdits icônes dans un dossier.

Si le flux multimédia 1 communiqué comprend une image ou une vidéo issue de la transformation d'un fichier 11, ledit émetteur peut sélectionner, par exemple en les faisant glisser depuis un dossier, des icônes 19, en vue d'insérer lesdits icônes en tant que médias 17 à insérer dans le flux multimédia 1 pour les superposer à ladite image ou vidéo.

En outre, la base de données du module 20 peut être adaptée à l'usage professionnel de l'application 3 de cybercaméra virtuelle. Par exemple, si l'émetteur travaille dans un centre d'appel d'un service après vente de matériel électronique, il peut insérer dans le flux multimédia 1 un média 17 comprenant une photographie d'un matériel, puis superposer à ladite photographie des icônes 19 représentant des outils particuliers, afin d'indiquer de façon simple et imagée à son correspondant les actions à mener pour réparer ledit matériel. L'émetteur peut également sélectionner une portion de texte 21, par exemple en la copiant depuis un fichier 11 texte ou depuis une page Internet, puis coller ladite portion dans la zone 13 de visualisation du flux multimédia 1 en vue de transformer ladite portion en un média 17 à superposer audit flux.

Pour ce faire, l'application 3 de cybercaméra virtuelle peut comprendre un module 22 de gestion des textes superposés, ledit module comprenant par exemple des moyens pour coopérer avec un dossier presse-papier tel que décrit précédemment afin de permettre à l'émetteur de copier une portion de texte 21, puis de coller ladite portion de texte sur une partie de la zone 13.

Par exemple, l'émetteur peut pointer le curseur de sa souris sur la partie de la zone 13 où il veut coller une portion de texte 21, puis activer un menu contextuel en cliquant sur le bouton droit de sa souris pour cliquer sur l'élément « coller » dudit menu. En outre, le module 22 de l'application 3 de cybercaméra virtuelle peut comprendre des moyens pour permettre à l'émetteur d'éditer directement la portion 21 dans la zone 13, par exemple en cliquant deux fois sur ladite portion dans ladite zone.

De même, l'application 3 de cybercaméra virtuelle peut comprendre des moyens pour permettre à l'émetteur de supprimer individuellement un média 17 superposé au flux multimédia 1, et ce directement dans la zone 13. Par exemple, ces moyens peuvent être aptes à afficher un menu contextuel lorsque l'émetteur clique sur le média 17 qu'il veut supprimer, ledit menu comprenant un élément spécifique que l'émetteur peut activer pour supprimer ledit média.

Selon une réalisation, le média 17 superposé dans un flux multimédia 1 peut également provenir d'une application tierce 23, comme une application de contrôle externe telle que Active X® et pouvant en particulier diffuser un avatar, ou une application de conversion de la voix en texte.

Dans ces exemples de réalisation, l'application 23 transforme localement la voix de l'émetteur en texte ou en information de contrôle de l'avatar, ledit texte ou l'ensemble avatar-information de contrôle dudit avatar étant alors sélectionné en tant que contenu 24 par l'application 3 de cybercaméra virtuelle.

Pour ce faire, l'application 3 de cybercaméra virtuelle peut comprendre des moyens pour permettre l'activation dans la zone 13 d'une sous-zone pour y afficher de façon dynamique le texte ou l'avatar fourni par l'application 23, ainsi qu'une interface de programmation pour permettre à l'application 23 d'envoyer le texte ou l'ensemble avatar-information de contrôle dudit avatar en tant que contenu 24, ledit contenu étant alors transformé en média 17 et inséré en tant que tel dans le flux multimédia 1.

Ces deux exemples de réalisation sont particulièrement avantageux lorsqu'un correspondant de l'émetteur est sourd ou malentendant, l'application 23 permettant audit correspondant de comprendre l'émetteur grâce à l'affichage dynamique dans une fenêtre 5 de l'écran de son terminal 4 d'un texte issu de la conversion de la voix dudit émetteur, ou d'un avatar reproduisant les paroles dudit émetteur en langage des signes.

En outre, le texte dynamique ou l'avatar peut être superposé au flux multimédia 1, lorsque par exemple ledit flux comprend une vidéo 6 de l'émetteur, ou inséré dans ledit flux de sorte à occuper toute la fenêtre 5 de l'écran du terminal 4 du correspondant.

Selon une autre réalisation, le média 17 peut être constitué de plusieurs contenus 11, 16, 19, 21, 24. Pour ce faire, l'émetteur peut d'abord sélectionner un contenu principal, par exemple un fichier 11 ou une capture d'écran 16 fixe, puis superposer audit contenu principal au moins un contenu secondaire, par exemple une image 19, une portion de texte 21, une zone de texte dynamique et/ou un ensemble avatar-information de contrôle dudit avatar 24, la superposition desdits contenus principal et secondaire(s) étant ensuite sélectionnée en tant que contenu global et transformée en média 17 unique à insérer dans le flux multimédia 1.

Les moyens de sélection de l'application 3 de cybercaméra virtuelle peuvent être aptes à afficher sur l'interface 10 une fonction interactive, par exemple un bouton ou un onglet, permettant à l'émetteur de sélectionner un contenu principal, puis de superposer audit contenu principal au moins un contenu secondaire, puis de valider ladite superposition afin qu'elle soit sélectionnée en tant que contenu global puis transformée en média 17 unique.

En particulier, cette réalisation permet à l'émetteur de préparer à l'avance des superpositions de contenus, par exemple en fonction des questions fréquemment posées sur la maintenance d'un matériel commercialisé par la société employant ledit émetteur, afin de gagner du temps. Pour ce faire, les moyens de sélection peuvent en particulier être aptes à permettre à l'émetteur de sauvegarder les contenus globaux obtenus par superposition de contenus 11, 16, 19, 21, 24 dans un dossier 12 permanent de son choix.

En outre, le module 18 de création de diaporamas peut être apte à coopérer avec les modules 20, 22, 23 et/ou de façon générale avec les moyens de sélection de l'application 3 de cybercaméra virtuelle, afin de permettre à l'émetteur de superposer des médias 17 issus d'icônes 19, d'une portion de texte 21, d'une zone de texte dynamique et/ou d'un ensemble avatar-information de contrôle dudit avatar 24 à un diaporama inséré dans le flux multimédia 1, et ce pendant une durée déterminée par ledit émetteur.

Le média 17 peut aussi comprendre du son, par exemple si le contenu correspondant audit média est un fichier 11 audio et/ou vidéo stocké dans un dossier 12 ou dans une base de données. En particulier, lorsque le flux multimédia 1 comprend déjà du son, comme la voix en temps réel de l'émetteur, ledit émetteur peut choisir de superposer le média 17 audit flux en enlevant le son dudit média et/ou le son dudit flux, ou encore de superposer le son dudit média au son dudit flux.

Pour ce faire, l'application 3 de cybercaméra virtuelle peut comprendre des moyens pour fournir une fonctionnalité d'entrée micro, qui peut en particulier se substituer à l'entrée micro de l'application 2 de visiophonie, et des moyens de mise à disposition de ladite fonctionnalité sous forme d'une fonction interactive affichée sur l'interface 10, afin de permettre à l'émetteur de gérer le son du média 17 et/ou du flux multimédia 1 uniquement depuis ladite interface.

En outre, l'application 3 de cybercaméra virtuelle peut comprendre des moyens pour afficher sur l'interface 10 une fonction interactive, comme un bouton ou un onglet, permettant à l'émetteur d'accéder à une fonctionnalité de réglage du son, par exemple au moyen d'un menu sous la forme d'un ou de plusieurs potentiomètres, afin de gérer manuellement le son du flux multimédia 1 et/ou du média 17 superposé.

Cette fonctionnalité de réglage du son permet à l'émetteur de communiquer facilement dans un flux multimédia 1 du son en tant que média 17 superposé audit flux, et notamment en évitant les effets sonores indésirables tel qu'un effet Larsen, un tel effet étant par exemple produit lorsque ledit émetteur place le micro de son casque à proximité des hauts parleurs de son terminal afin de communiquer à son correspondant le son sortant desdits hauts parleurs.

En outre, l'application 3 de cybercaméra virtuelle peut comprendre des moyens pour fournir une fonctionnalité permettant à l'émetteur d'exclure du flux multimédia 1 communiqué par l'application 2 de visiophonie tout son provenant du système d'exploitation installé sur son terminal ou de toute autre application active sur ledit terminal, comme par exemple les notifications sonores d'activation de liens hypertexte, de réception de courriels ou de messages d'erreur, et ainsi améliorer la qualité de la conversation avec ses correspondants.

Selon une réalisation, cette fonctionnalité d'exclusion de sons peut être désactivée automatiquement lorsque l'émetteur ne communique pas de flux multimédia 1, afin que ledit émetteur puisse profiter des sons du système d'exploitation et/ou des applications actives sur son terminal hors conversation. En outre, le module 18 de création de diaporamas peut être apte à coopérer avec ces moyens de l'application 3 de cybercaméra virtuelle pour permettre à l'émetteur de superposer un média 17 issu d'un fichier 11 comprenant du son à un diaporama inséré dans le flux multimédia 1 communiqué, et ce pendant une période déterminée par ledit émetteur.

Pour améliorer davantage la qualité de la communication d'un flux multimédia 1 enrichi, le procédé prévoit en outre que les paramètres de transmission du média 17 inséré dans ledit flux, notamment sa résolution et/ou sa cadence, et/ou les paramètres de transmission dudit flux, soient adaptés en fonction de la nature du contenu correspondant audit média et/ou de la bande passante disponible pour la communication. Pour ce faire, les moyens d'insertion de l'application 3 de cybercaméra virtuelle sont aptes à adapter ainsi les paramètres de transmission du média 17 inséré et/ou du flux multimédia 1.

La bande passante utilisée pour envoyer un flux multimédia 1 codé, par exemple avec un codeur-décodeur H263, et comprenant en particulier un média 17 issu d'une image, d'une capture d'écran ou d'une vidéo, et éventuellement une vidéo 6 en temps réel de l'émetteur, dépend de la résolution dudit média et de la vidéo 6 éventuelle, du nombre de trames par seconde et du nombre de changement de pixels d'une trame à l'autre.

Ainsi, la communication d'un flux multimédia 1 comprenant au moins une vidéo comme média 17 inséré ou comme vidéo 6 de l'émetteur consomme beaucoup de bande passante, tandis que la communication d'un tel flux comprenant une image fixe consomme très peu de bande passante, et que la communication d'un tel flux comprenant un média issu d'une capture d'écran 16 est intermédiaire et dépend en particulier de la cadence de l'image visible dans la zone 13 de l'interface 10.

En particulier, un codeur-décodeur H264 peut déduire la qualité de résolution à appliquer au média 17 inséré dans le flux multimédia 1 et/ou audit flux multimédia en fonction de la bande passante disponible, de la cadence du contenu sélectionné correspondant audit média et d'autres paramètres d'encodage qui lui sont propres.

Le procédé prévoit donc d'adapter les paramètres de transmission du média 17 inséré dans le flux multimédia 1 et/ou dudit flux multimédia en fonction de la nature du contenu correspondant, afin que le flux multimédia 1 soit communiqué aux correspondants de l'émetteur avec notamment la meilleure résolution et la meilleure cadence possibles, en fonction de la bande passante disponible pour la communication dudit flux.

Ainsi, selon un mode de réalisation, le procédé peut prévoir, lorsque le contenu sélectionné est une image, de transformer ledit contenu en un média 17 et d'insérer ledit média dans le flux multimédia 1 avec une résolution élevée, par exemple selon l'une des normes de résolution CIF (352x288 pixels), 4CIF (704x576 pixels), 720p ou 1080p, et une cadence faible, afin que le correspondant reçoive dans la fenêtre 5 de son terminal 4 ladite image avec une haute qualité garantissant une bonne précision et un bon confort de lecture.

En contrepartie, pour limiter la consommation de bande passante, le procédé peut prévoir d'ajuster les paramètres de transmission du flux multimédia 1 en fonction de la qualité d'affichage souhaitée pour le média 17, notamment lorsque ledit flux comprend une vidéo 6 en temps réel de l'émetteur, afin de privilégier la lisibilité dudit média.

En effet, lorsque le média 17 est inséré dans le flux multimédia en étant superposé audit flux, le codeur-décodeur déduit la cadence et la résolution à appliquer audit média et au flux multimédia 1 en fonction de la nature du contenu principal dudit flux. En particulier, lorsque le média 17 est issu d'une image affichée en incrustation (PiP, pour Picture in Picture) sur une vidéo 6 en temps réel de l'émetteur, la résolution du flux multimédia est faible et la cadence élevée, ce qui nuit à la qualité d'affichage de ladite image.

Pour pallier à cette lacune, l'application 3 de cybercaméra virtuelle peut être apte à appliquer une logique de décision afin de permettre au codeur-décodeur d'ajuster les paramètres de transmission du flux multimédia 1 en fonction de la qualité souhaitée pour le média 17, afin d'obtenir une qualité d'affichage optimale dudit média.

Le procédé peut également prévoir, lorsque le contenu sélectionné est une vidéo, de transformer ledit contenu en un média 17 et d'insérer ledit média dans le flux multimédia 1 avec une résolution faible, par exemple selon l'une des normes de résolution QCIF (176x144 pixels) ou CIF (352x288 pixels), et une cadence élevée, afin de limiter la consommation de bande passante et les problèmes d'affichage de ladite vidéo , pour un meilleur confort de lecture par le correspondant.

En outre, lorsque le contenu sélectionné est une capture d'écran 16 du terminal de l'émetteur, le procédé peut prévoir de transformer ledit contenu en un média 17 et d'insérer ledit média dans le flux multimédia 1 avec une résolution intermédiaire, par exemple parmi les normes de résolution CIF (352x288 pixels) ou 4CIF (704x576 pixels), ladite résolution étant adaptée en particulier à la résolution de l'image visible dans la zone 13 de l'interface 10, et avec une cadence relativement faible.

En particulier, lorsque le flux multimédia 1 comprend une vidéo 6, l'application 3 de cybercaméra virtuelle peut appliquer une logique de décision afin d'afficher la capture d'écran 16 transformée en grand format sur la fenêtre 5 et ladite vidéo en incrustation sur ladite capture d'écran. Ainsi, le codeur-décodeur considère le média 17 issu de la capture 16 comme étant le contenu principal du flux multimédia 1, et ajuste les paramètres de transmission dudit flux en fonction de la qualité d'affichage souhaitée pour le média 17.En outre, lorsque le média 17 est lui-même constitué de plusieurs contenus, par exemple d'un fichier 11 image en grand format sur lequel est affichée en incrustation une vidéo 6 de l'émetteur et d'une zone de texte dynamique et/ou d'un ensemble avatar-information de contrôle dudit avatar 24 pour reproduire les paroles dudit émetteur sous forme de texte et/ou de langage des signes, l'application 3 de cybercaméra virtuelle peut appliquer une logique de décision afin d'ajuster les paramètres de transmission du média 17 et du flux multimédia 1 de sorte que chacun des contenus dudit média soient affichés avec une qualité suffisante.

En particulier, l'application 3 peut appliquer une logique de décision afin que le codeur-décodeur ajuste les paramètres de transmission du média 17 inséré en fonction de la qualité souhaitée pour un contenu particulier dudit média, par exemple pour qu'un texte dynamique et/ou qu'un ensemble avatar-information de contrôle dudit avatar 24 soi(en)t affiché(s) avec une cadence suffisamment importante pour être lisible(s).

Pour adapter les paramètres de transmission du média 17 inséré et/ou du flux multimédia 1, le procédé peut prévoir, lors de la sélection par l'émetteur du contenu correspondant, l'envoi d'une notification 25 de la nature dudit contenu à l'application 2 de visiophonie, ladite application de visiophonie comprenant des moyens pour adapter lesdits paramètres en fonction de règles liées à ladite nature.

Pour cela, les moyens d'insertion de l'application 3 de cybercaméra virtuelle sont aptes à envoyer, lors de la sélection d'un contenu par l'émetteur, une notification 25 de la nature dudit contenu à l'application 2 de visiophonie, ladite application de visiophonie comprenant, de façon connue, des règles pour appliquer des paramètres par défaut au média 17 inséré et/ou au flux multimédia 1 en fonction de la nature dudit contenu.

Le procédé peut prévoir une interface de programmation pour adapter les paramètres de transmission du média 17 inséré et/ou du flux multimédia 1, les moyens d'insertion de l'application 3 de cybercaméra virtuelle étant aptes à adapter lesdits paramètres au moyen de ladite interface de programmation.

En outre, cette interface de programmation peut être fournie par l'application 2 de visiophonie pour permettre aux moyens d'insertion de l'application 3 de cybercaméra virtuelle d'adapter les paramètres de transmission du média 17 inséré et/ou du flux multimédia 1 au moyen de ladite interface de programmation.

En outre, le procédé peut prévoir une intervention de l'émetteur pour adapter les paramètres de transmission du média 17 inséré et/ou du flux multimédia 1. Pour ce faire, les moyens d'insertion de l'application 3 de cybercaméra virtuelle peuvent fournir une fonctionnalité d'adaptation par l'émetteur de ces paramètres, ainsi qu'une fonction interactive d'accès par ledit émetteur à ladite fonctionnalité depuis l'interface 10.

Par exemple, les moyens d'insertion de l'application 3 de cybercaméra virtuelle peuvent être aptes à afficher sur l'interface 10 une fonction interactive, par exemple un bouton ou un onglet, pour permettre à l'émetteur d'accéder à un menu comprenant par exemple un tableau de paramétrage du média 17 inséré dans le flux multimédia 1 et/ou dudit flux multimédia en fonction de la nature du contenu correspondant. En outre, l'application 3 de cybercaméra virtuelle peut être initialement fournie avec un tel tableau rempli de paramètres par défaut pour le média 17 inséré dans le flux multimédia 1 et/ou pour ledit flux multimédia.

Les moyens de transformation peuvent également être aptes à afficher sur l'interface 10 une fonction interactive sous forme d'un curseur de contrôle, afin de permettre à l'émetteur de changer rapidement les paramètres de transmission du média 17 inséré dans le flux multimédia 1 et/ou dudit flux multimédia, par exemple durant la communication dudit flux multimédia, et ce sans avoir à changer les paramètres par défaut pour ledit média inséré et/ou pour ledit flux multimédia.

En outre, lorsque le média 17 est issu d'une vidéo et que l'émetteur interrompt momentanément la diffusion de ladite vidéo, par exemple en activant un bouton « pause » sur l'interface 10, la trame de ladite vidéo apparaissant dans la zone 13 peut être automatiquement sélectionnée en tant que contenu image, et ses paramètres de transmission adaptés en conséquence.

En particulier, si les moyens d'insertion de l'application 3 sont aptes à fournir un média 17 issu d'une image avec une résolution élevée, la résolution de la trame de la vidéo interrompue sera de haute qualité, ce qui permet en particulier à l'émetteur d'insister sur un détail de ladite vidéo en améliorant la visibilité dudit détail pour son correspondant.

En outre, les moyens d'insertion peuvent être aptes à coopérer avec le module 18 de création de diaporamas, afin que les paramètres de transmission des médias 17 issus des contenus sélectionnés par l'émetteur pour être inclus dans un diaporama soient automatiquement adaptés lors de la communication dudit diaporama dans le flux multimédia 1.

## Revendications

1. Procédé d'enrichissement d'un flux multimédia (1) communiqué par un émetteur au moyen d'une application (2) de visiophonie, ledit procédé prévoyant la sélection par l'émetteur d'un contenu (11, 16, 19, 21, 24), la transformation dudit contenu en un média (17) apte à être communiqué au moyen de l'application (2) de visiophonie, puis l'insertion dudit média dans le flux multimédia (1) communiqué, ledit procédé étant **caractérisé en ce que** les paramètres de transmission du média (17) inséré et/ou du flux multimédia (1) sont adaptés en fonction de la nature du contenu (11, 16, 19, 21, 24) et/ou de la bande passante disponible pour la communication.

2. Procédé d'enrichissement selon la revendication 1, **caractérisé en ce que** l'émetteur sélectionne un contenu (11) dans un dossier (12) en copiant ledit contenu pour le coller dans une zone (13) de visualisation du flux multimédia (1) communiqué ou en faisant glisser ledit contenu depuis ledit dossier dans ladite zone.

3. Procédé d'enrichissement selon la revendication 1 ou 2, **caractérisé en ce que** l'émetteur sélectionne un contenu dans le flux multimédia (1) communiqué.

4. Procédé d'enrichissement selon l'une quelconque des revendications 1 à 3, **caractérisé en ce que** plusieurs contenus (11, 16, 19, 21, 24) sont transformés en médias (17), lesdits médias étant insérés successivement dans le flux multimédia (1) communiqué, avec des effets de transition intercalés entre chacun desdits médias.

5. Procédé d'enrichissement selon l'une quelconque des revendications 1 à 4, **caractérisé en ce que** le média (17) est inséré dans le flux multimédia (1) en étant superposé audit flux.

6. Procédé d'enrichissement selon l'une quelconque des revendications 1 à 5, **caractérisé en ce que** le média (17) est constitué de plusieurs contenus (11, 16, 19,21,24).

7. Procédé d'enrichissement selon l'une quelconque des revendications 1 à 6, **caractérisé en ce qu'**il prévoit, lors de la sélection par l'émetteur d'un contenu (11, 16, 19, 21, 24), l'envoi d'une notification (25) de la nature dudit contenu à l'application (2) de visiophonie, ladite application comprenant des moyens pour adapter les paramètres de transmission du média (17) inséré dans le flux multimédia 1 et/ou dudit flux multimédia en fonction de règles liées à ladite nature.

8. Procédé d'enrichissement selon l'une quelconque des revendications 1 à 7, **caractérisé en ce qu'**il prévoit une interface de programmation (API) pour adapter les paramètres de transmission du média (17) inséré et/ou du flux multimédia 1.

9. Procédé d'enrichissement selon l'une quelconque des revendications 1 à 8, **caractérisé en ce qu'**il prévoit une intervention de l'émetteur pour adapter les paramètres de transmission du média (17) inséré et/ou du flux multimédia 1.

10. Application (3) de cybercaméra virtuelle pour l'enrichissement d'un flux multimédia (1) communiqué par un émetteur au moyen d'une application (2) de visiophonie, ladite application comprenant :
- des moyens de sélection par l'émetteur d'un contenu (11, 16, 19, 21, 24) ;
- des moyens de transformation dudit contenu en un média (17) apte à être communiqué au moyen de l'application (2) de visiophonie ;
- des moyens d'insertion dudit média dans le flux multimédia (1) communiqué ;
ladite application étant **caractérisée en ce que** les moyens d'insertion sont aptes à adapter les paramètres de transmission du média (17) inséré et/ou du flux multimédia (1) en fonction de la nature du contenu (11, 16, 19, 21, 24) et/ou de la bande passante disponible pour la communication.

11. Application (3) de cybercaméra virtuelle selon la revendication 10, **caractérisée en ce que** les moyens d'insertion sont aptes à envoyer, lors de la sélection d'un contenu (11, 16, 19, 21, 24) par l'émetteur, une notification (25) de la nature dudit contenu à l'application (2) de visiophonie.
